# EUROPÄISCHE PATENTSCHRIFT

(11) **EP 1 728 576 B1**
(45) Veröffentlichungstag und Bekanntmachung des Hinweises auf die Patenterteilung: **19.03.2008**
(21) Anmeldenummer: 06008987.7
(22) Anmeldetag: 29.04.2006
(51) Int. Cl.: B23D 37/08, B23Q 5/28, B23Q 1/01

(54) **Vorrichtung zum Ziehen, Stossen oder Räumen von Nuten mit einem elektromagnetischen Linearantrieb**
Device for broaching grooves with an electromagnetic linear motor
Dispositif de brochage de rainures avec un moteur linéaire électromagnétique

(30) Priorität: 31.05.2005 DE 102005025370
(43) Veröffentlichungstag der Anmeldung: 06.12.2006
(73) Patentinhaber: Leistritz Aktiengesellschaft, 90459 Nürnberg (DE)
(72) Erfinder: Theusner, Klaus, 34414 Warburg (DE)
(74) Vertreter: Blaumeier, Jörg

(56) Entgegenhaltungen:
- EP-A- 0 978 340
- WO-A-02/28592
- DE-A1- 4 202 035
- DE-A1- 19 650 360
- US-A- 4 831 290
- US-A1- 2004 165 962
- US-A1- 2004 198 204
- US-B1- 6 402 381

## Beschreibung

Die Erfindung betrifft eine Vorrichtung zum Ziehen, Stoßen oder Räumen von Nuten oder Profilen, umfassend ein über eine Antriebseinrichtung bezüglich eines zu bearbeitenden Werkstücks vertikal bewegbares Werkzeugaggregat.

Eine Vorrichtung der eingangs genannten Art dient zum Ausbilden von Nuten oder Profilen an oder in Werkstücken, beispielsweise in Form von Passfedernuten, Drallnuten, Innen- oder Außenprofilen oder dergleichen. Hierzu weist die Vorrichtung ein Maschinengestell mit einem Aufspanntisch für das zu bearbeitende Werkstück auf, sowie ein Werkzeugaggregat, das über eine Antriebseinrichtung vertikal bezüglich des feststehenden Werkstücks bewegt wird. Das Werkzeugaggregat verfügt über ein Werkzeug in Form eines Zieh-, Stoß- oder Räummessers, das über bekannte Verstellmechanismen zum Vergrößern der Nuttiefe kontinuierlich automatisch nachgestellt wird. Der Aufbau eines solchen Werkzeugaggregats wie auch die unterschiedlichen Verstellmechanismen für die Werkzeugverstellung bzw. den Werkzeugvorschub sind hinlänglich bekannt und bedürfen keiner weiteren Ausführung.

Zum vertikalen Bewegen des Werkzeugaggregats ist beispielsweise aus DE 42 02 035 C2 der Einsatz eines Hubschlittens, der das Werkzeugaggregat trägt, bekannt. Der Hubschlitten ist an einen Kugelgewindetrieb mit Spindel und Spindelmutter angeschlossen, wobei die Spindel von einem spielfreien Zahnriementrieb angetrieben wird, der andererseits an den Abtrieb eines elektrischen Servomotors über ein Übersetzungsgetriebe angeschlossen ist. Dieser Aufbau ist sehr aufwändig, insbesondere unterliegt der Zahnriementrieb Bewegungsungleichförmigkeiten, der Zahnriemen verschleißt im Laufe der Zeit, es kann zu einer Zahnriemenlängung mit zunehmender Betriebsdauer kommen, die Vertikalbewegung ist infolge der quasi indirekten Kopplung des Hubschlittens mit dem Servomotor über den Zahnriementrieb nicht optimal.

Aus EP-A-0 978 340 ist eine Senkrecht-Räummaschine bekannt, bestehend aus einem formsteifen Maschinengestell, einem motorisch an Vertikal-Führungsbahnen verfahrbaren Räumtisch mit Werkstückhaltern zum Einspannen der Werkstücke, mindestens einem beim Räumen fixierten Räumwerkzeug und einer Steuerungseinrichtung für die Bearbeitungsoperation. Der Räumtisch ist in seitlichen Führungen im Maschinengestell geführt, die Räumwerkzeuge sind an der formsteifen Rückwand des Maschinengestells auswechselbar montiert. Zur Bewegung des Räumtisches kommen zwei Druckmittelzylinder zum Einsatz.

Ferner ist aus DE 196 50 360 A1 eine Antriebseinheit für Werkzeugmaschinen bekannt, die ein Lineardirektantriebssystem umfassen kann, das einen bewegten Antriebsteil hat, die aus zwei Primärteilen besteht, die zwischen zwei Sekundärteilen angeordnet sind.

Der Erfindung liegt damit das Problem zugrunde, eine Vorrichtung der eingangs genannten Art anzugeben, die demgegenüber verbessert ist.

Zur Lösung dieses Problems ist bei einer Vorrichtung der eingangs genannten Art erfindungsgemäß vorgesehen, dass die das über wenigstens eine vertikale Linearführung geführte Werkzeugaggregat bewegende Antriebseinrichtung ein vertikal arbeitender elektromagnetischer Linearantrieb ist, wobei der Linearantrieb außerhalb eines Vorrichtungsgehäuses oder eines Vorrichtungsgestells angeordnet ist, wobei das Werkzeugaggregat über einen Träger mit einem beweglichen Teil der Linearführung verbunden ist, der eine vertikal verlaufende Durchbrechung in der das Vorrichtungsgehäuse oder Vorrichtungsgestell rückwärtig schließenden Wand durchsetzt.

Die Erfindung schlägt ein völlig neuartiges Antriebskonzept für in Rede stehende Vorrichtungen vor, das wenigstens einen direkt antreibenden, elektromagnetischen Linearantrieb anstelle der bisherigen indirekten, mechanischen Riemenkopplung vorsieht. Das Werkzeugaggregat, das mit dem elektromagnetischen Linearantrieb gekoppelt ist, wird über diesen direkt vertikal bewegt. Der elektromagnetische Linearantrieb unterliegt annähernd keinen Verschleißerscheinungen, nachdem dort keine stark mechanisch beanspruchten Elemente aufgrund des elektromagnetischen Antriebskonzeptes vorgesehen sind, anders als bei dem Antrieb, wie er beispielsweise in DE 42 02 035 C2 beschrieben ist. Es lässt sich eine hochpräzise Bewegung des Werkzeugaggregats realisieren, nachdem ein erfindungsgemäß eingesetzter elektromagnetischer Linearantrieb höchst genau gesteuert werden kann. Auch ist ohne weiteres die Bearbeitung harten oder weichen Materials sowie der Einsatz von Trocken- oder Nassbearbeitungsverfahren unter Verwendung eines erfindungsgemäß eingesetzten elektromagnetischen Linearantriebs möglich. Schließlich ist es mit einem Linearmotor möglich, extrem hohe Antriebsmomente zu erzeugen, was sich sehr vorteilhaft auf den Zieh-, Stoß- oder Räumvorgang auswirkt.

Zweckmäßig ist es, wenn zwei parallel arbeitende, einander gegenüberliegende elektromagnetische Linearantriebe vorgesehen sind, die bevorzugt über eine gemeinsame Steuerungseinrichtung angesteuert werden. Hierüber kann ein äußerst exakter, symmetrischer und kräftemäßig optimierter Antrieb des Werkzeugaggregats realisiert werden.

Erfindungsgemäß ist vorgesehen, dass den oder die Linearantriebe außerhalb eines Vorrichtungsgehäuses oder Vorrichtungsgestells anzuordnen, wobei das Werkzeugaggregat an einem Träger angeordnet ist, der mit einem beweglichen Teil der einen oder beider Linearführungen verbunden ist. Die Antriebseinrichtung, also der oder die Linearantriebe sind hier extern zum Gehäuse oder Gestell, so dass sie keinerlei Verschmutzungen, die aus dem Ziehen oder Stoßen oder Räumen resultieren, unterworfen sind. Dabei sind bei Verwendung zweier Linearantriebe diese bevorzugt einander gegenüberliegend angeordnet und nehmen den Träger zwischen sich auf, während die eine oder die beiden Linearführungen an der rückwärtigen Seite des Vorrichtungsgehäuses oder Vorrichtungsgestells vorgesehen sind. Um eine noch bessere Trennung des oder der Linearantriebe vom eigentlichen Arbeitsbereich zu realisieren, als sie ohnehin infolge der externen Anordnung bereits gegeben ist, ist vorgesehen, dass das Vorrichtungsgehäuse oder das Vorrichtungsgestell rückwärtig über eine Wand geschlossen ist, wobei diese eine vertikal verlaufende Durchbrechung aufweist, durch die der Träger greift. Insbesondere im Falle einer Nassbearbeitung, bei der bevorzugt das Gehäuse insgesamt weitestgehend geschlossen ist, kann auf diese Weise jedwede Verschmutzung der Linearantriebe verhindert werden, wobei bevorzugt die Durchbrechung über eine entsprechende Dichtung verfügt, die auch zum Tragarm hin abdichtet.

Das Werkzeugaggregat selbst ist bevorzugt an zwei parallelen Linearführungen geführt, die so ausgelegt sind, dass trotz der beim Stoßen, Ziehen oder Räumen entstehenden bzw. erzeugten Kräfte und Momente eine sichere, hochpräzise Führung des Werkzeugaggregats realisiert ist.

Weitere Vorteile, Merkmale und Einzelheiten der Erfindung ergeben sich aus den im Folgenden beschriebenen Ausführungsbeispielen sowie anhand der Zeichnungen, wobei die erste Ausführungsform nach den Figuren 1-3 nicht unter dem Schutzumfang der Ansprüche fällt. Dabei zeigen:
- Fig. 1: eine Perspektivansicht einer Vorrichtung einer ersten Ausführungsform,
- Fig. 2: eine Horizontalschnittansicht der Vorrichtung aus Fig. 1,
- Fig. 3: eine Vertikalschnittansicht der Vorrichtung aus Fig. 1,
- Fig. 4: eine Perspektivdarstellung einer erfindungsgemäßen Vorrichtung einer zweiten Ausführungsform,

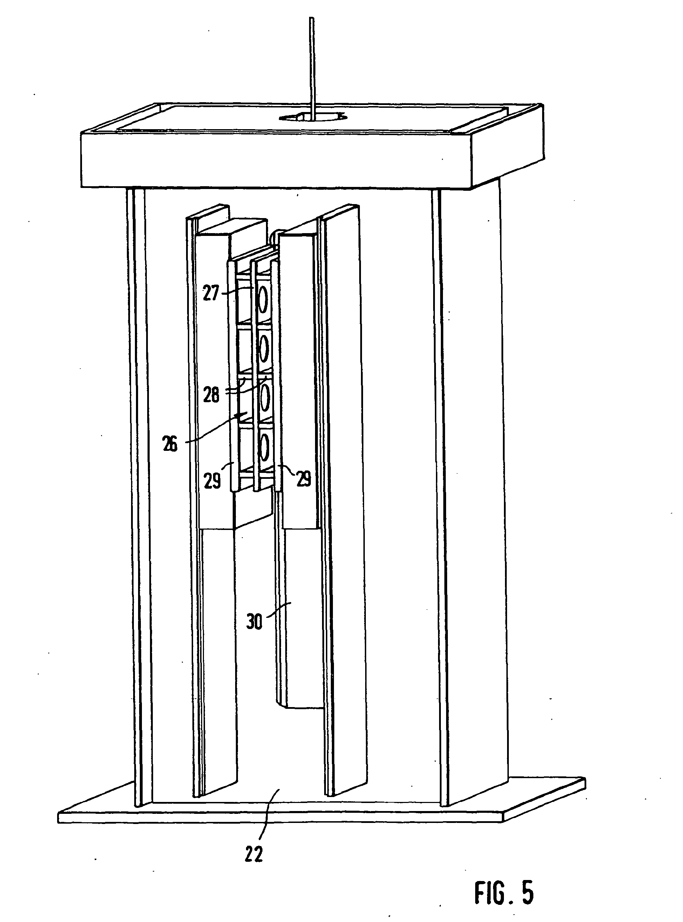

- Fig. 5: eine rückwärtige Ansicht der Vorrichtung aus Fig. 4, und

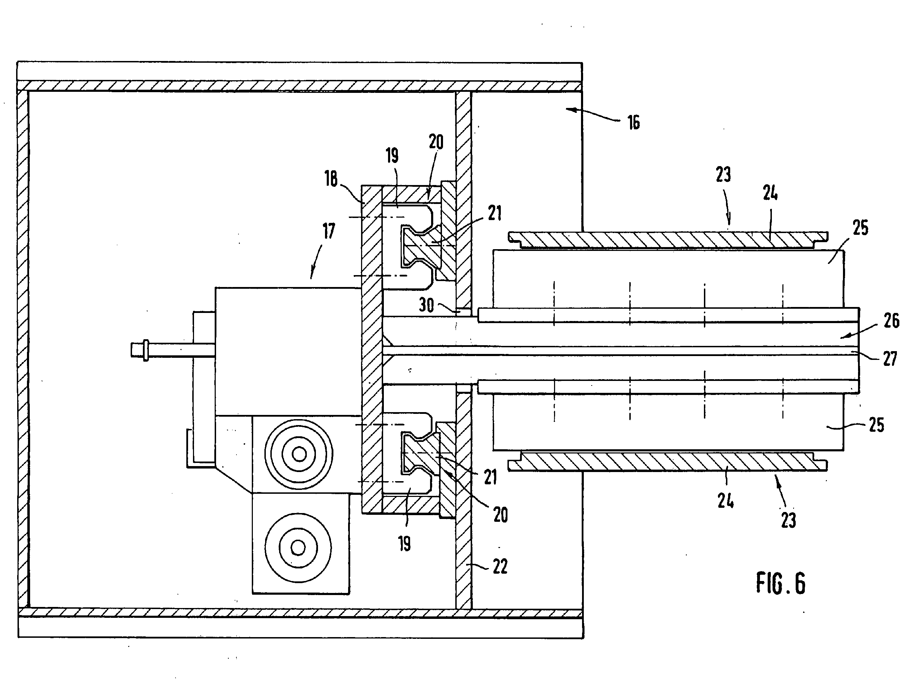

- Fig. 6: eine Horizontalschnittansicht der Vorrichtung aus den Fig. 4 und 5.

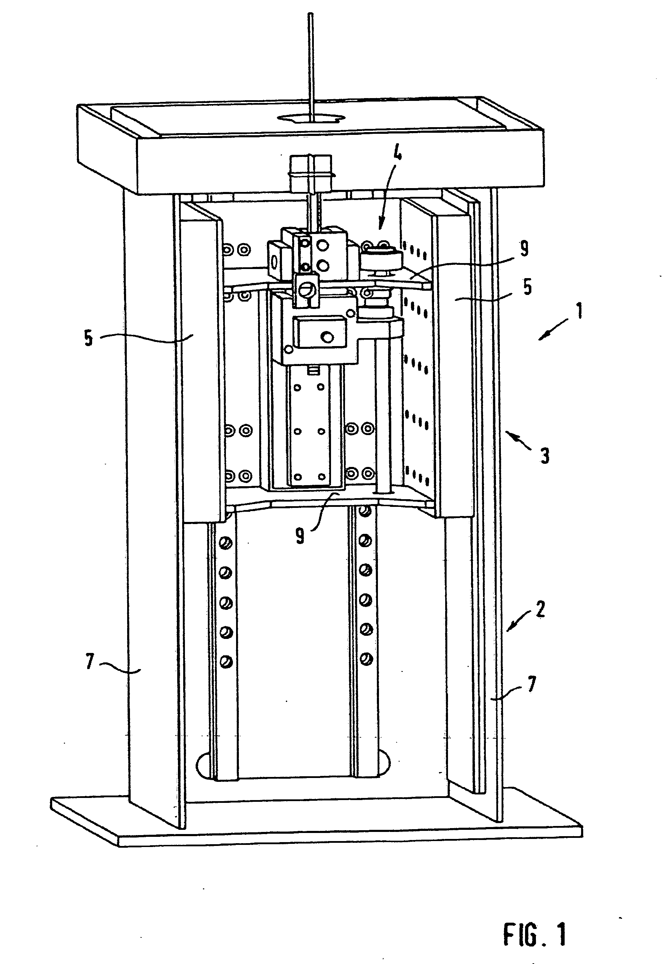

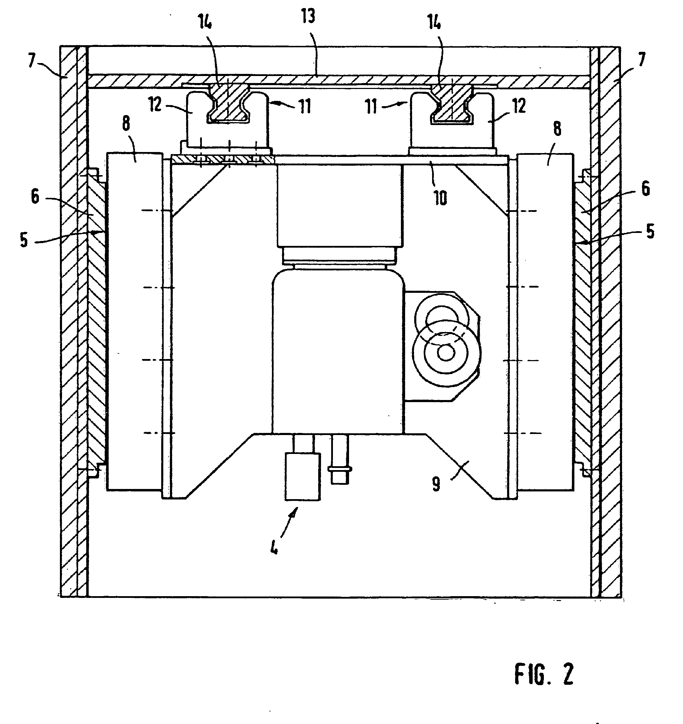

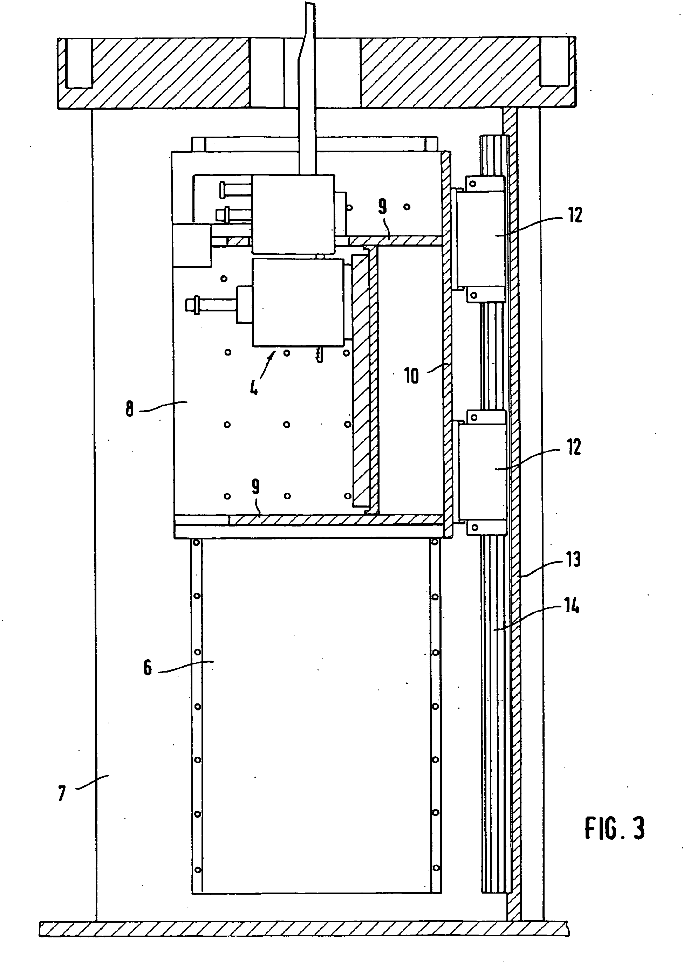

Figuren 1 - 3 zeigen eine Vorrichtung 1 zum Ziehen, Stoßen oder Räumen von Nuten, umfassend ein Vorrichtungsgehäuse oder Gestell 2, in dem über eine Antriebseinrichtung 3 vertikal bewegbar ein Werkzeugaggregat 4 geführt ist. Die Antriebseinrichtung 3 besteht aus zwei elektromagnetischen Linearantrieben 5, die, siehe Fig. 2, an zwei einander gegenüberliegenden Seiten des Vorrichtungsgestells oder Vorrichtungsgehäuses 2 angeordnet sind und zwischen sich das Werkzeugaggregat 4 aufnehmen. Bei einem elektromagnetischen Linearantrieb oder Linearmotor, wie solche Antriebseinrichtungen auch bezeichnet werden, handelt es sich um eine elektrische Maschine zur Umwandlung elektrischer in mechanische Energie, wobei keine rotierenden, sondern ausschließlich translatorisch wirkenden Antriebskräfte erzeugt werden. Ein elektromagnetischer Linearantrieb 5 verfügt über eine Schiene 6, die im gezeigten Beispiel jeweils an den Seitenwangen 7 des Vorrichtungsgehäuses oder Vorrichtungsgestells 2 lagefest angeordnet ist. Es handelt sich hierbei um das Ständerteil. Bezüglich diesem über einen Luftspalt getrennt und vertikal bewegbar weist jeder Linearmotor das Reaktionsteil 8 auf, in dem, im gezeigten Beispiels jedoch nicht näher dargestellt, die entsprechenden bestromten Wicklungen vorhanden sind, über die das elektromagnetische Wanderfeld in Verbindung mit der Schiene erzeugt wird. Bereits an dieser Stelle ist darauf hinzuweisen, dass je nach Anwendungsfall unterschiedliche Typen von Linearmotoren eingesetzt werden können, also entweder Gleichstrom-, Asynchron- oder Synchronlinearmotoren, wobei je nach Anwendungsfall die Ausgestaltung der Schiene 6 sowie des Reaktionsteils 8, das auch als Schlitten bezeichnet werden kann, vorzunehmen ist.

Mit den Schlitten gekoppelt ist das Werkzeugaggregat 4, das über entsprechende Tragplatten 9 mit dem jeweiligen Reaktionsteil oder Schlitten 8 verbunden ist. Rückseitig ist das Werkzeugaggregat 4 an einer vertikalen Trägerplatte 10 angeordnet, die wiederum mit zwei Linearführungen 11 verbunden ist. Über diese beiden Linearführungen 11 erfolgt die hochpräzise Vertikalführung des Werkzeugaggregats 4, angetrieben über die beiden Linearmotoren 5. Die Linearführungen weisen jeweils zwei Schlitten 12 auf, die mit der Vertikalplatte 10 verbunden sind, und die jeweils auf an der Gehäuserückwand 13 angeordneten Führungsschienen 14 laufen.

Im Arbeitsbetrieb wird zunächst das Werkzeug in bekannter Weise eingespannt, wonach zum Erzeugen der Nuten oder der Profile über die hier nicht näher gezeigte Steuerungseinrichtung die beiden Linearantriebe 5 für die vertikale Auf- und Abbewegung entsprechend angesteuert werden. Dabei wird infolge der unmittelbaren, starren mechanischen Kopplung des Werkzeugaggregats 4 mit den Linearmotoren 5 die hierüber erzeugte Vertikalbewegung auch unmittelbar umgesetzt, anders als bei den bisher bekannten Riementrieben. Infolgedessen kann auch in Verbindung mit der äußerst exakten Ansteuerbarkeit der Linearmotoren eine hochpräzise Bewegungssteuerung realisiert werden.

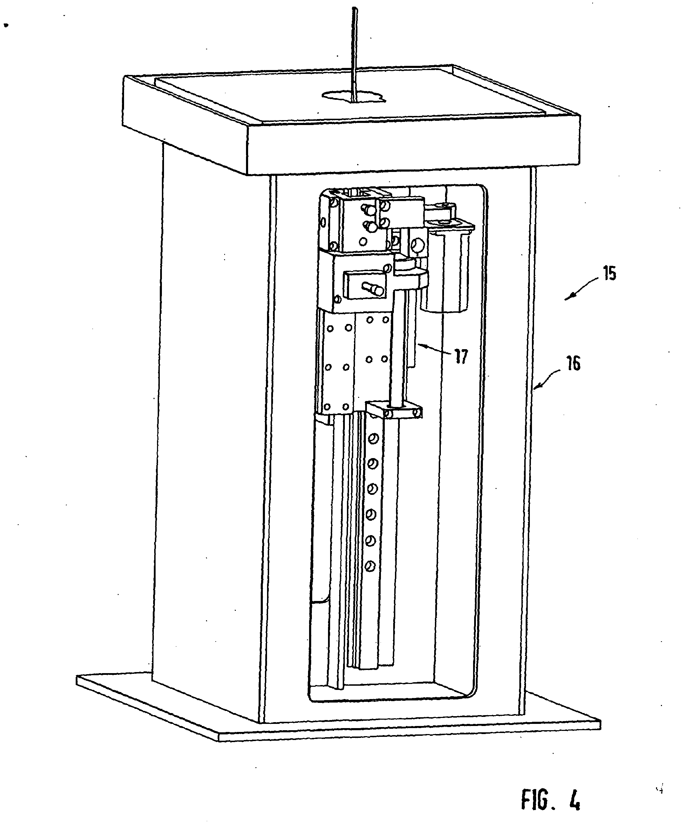

Fig. 4 zeigt die erfindungsgemäße Ausführungsform einer Vorrichtung 15, ebenfalls umfassend ein Vorrichtungsgestell oder hier bevorzugt Vorrichtungsgehäuse 16, in dem vertikal beweglich ein Werkzeugaggregat 17 aufgenommen ist. Auch bei diesem Werkzeugaggregat 17 kann es sich um ein beliebiges, das Ziehen, Stoßen oder Räumen von Nuten ermöglichendes Aggregat handeln. Auf die konkrete Ausgestaltung des Aggregats kommt es im Rahmen der Erfindung nicht an.

Das Werkzeugaggregat 17 ist an einer rückwärtigen Vertikalplatte 18 angeordnet, an der wiederum die beiden Schlitten 19, die Teil jeweils einer Linearführung 20 sind, angeordnet sind. Die Schlitten 19 laufen auf jeweils einer vertikalen Schiene 21, die an einer Gehäuserückwand 22 angeordnet sind.

Anders als bei der Ausführungsform gemäß Fig. 1 befinden sich hier die beiden elektromotorischen Linearantriebe oder Linearmotoren 23 außerhalb des Vorrichtungsgehäuses 16. Sie liegen einander gegenüber und bestehen auch hier wie üblich aus jeweils einer Schiene 24, auf welcher über ein Luftspalt getrennt ein Reaktionsteil 25, also ein Schlitten läuft. Auch bei dieser Ausgestaltung befinden sich beispielsweise die der Magnetfelderzeugung dienenden Wicklungen im Inneren des Reaktionsteils oder Schlittens 25. Sie werden auch hier über eine nicht näher gezeigte gemeinsame Steuerungseinrichtung synchron angesteuert.

Die beiden Schlitten 25 sind mit dem Werkzeugaggregat 17 über einen Träger 26 fest verbunden. Dieser Träger 26 umfasst im gezeigten Beispiel eine zentrale Trägerplatte 27, die über entsprechende horizontale Verbindungen 28 mit seitlichen Trägerplatten 29 verbunden ist, die wiederum fest mit dem Schlitten 25 verschraubt sind. Die Trägerplatte 27 wiederum ist fest mit der vertikalen Rückwandplatte 18 verbunden, entsprechend können auch die horizontalen Verbindungsplatten 28 fest mit der Rückwand 18 verschraubt sein. In jedem Fall durchgreift der vertikale Durchbrechung 30. Die Linearmotoren 23 sind folglich nicht nur extern angeordnet, sie sind darüber hinaus auch noch durch die geschlossene Rückwand 22 vom Arbeitsbereich, der, siehe Fig. 4, bis auf die zentrale vordere Öffnung allseitig geschlossen ist (mit Ausnahme der Vertikaldurchbrechung 30) getrennt.

Insbesondere die Verwendung zweier einander gegenüberliegender elektromagnetischer Linearantriebe, die mechanisch starr mit dem Werkzeugaggregat über entsprechende Tragkonstruktionen oder Verbindungen gekoppelt sind, in Verbindung mit der bevorzugt doppelten Linearführung des Werkzeugaggregats ermöglicht ein hoch exaktes, annähernd völlig verschleißarmes Arbeiten. Dieses grundsätzliche Antriebskonzept des Werkzeugaggregats unter Verwendung der elektromagnetischen Linearmotoren kann bei allen Typen von Nuten- oder Profilerzeugungsmaschinen eingesetzt werden, die nass oder trocken arbeiten können, auch hinsichtlich der verwendbaren Werkzeuge bestehen keinerlei Beschränkungen. Ein weiterer Vorteil ist schließlich noch darin zu sehen, dass auch die Länge der über die Linearmotoren realisierten Linearbewegung keinen Beschränkungen unterworfen ist, das heißt, es können Vorrichtungen aufgebaut werden, die - verglichen mit bisherigen Vorrichtungen - die Bearbeitung deutlich längerer Werkstücke ermöglichen, nachdem die Linearmotoren letztlich beliebig lang ausgeführt werden können, auch die Linearführungen stellen diesbezüglich keinerlei Beschränkung dar.

Die vorteilhafte Integration der der Felderzeugung dienenden Wicklungen im mit dem Werkzeugaggregat gekoppelten, also mit diesem bewegten Reaktionsteil ist selbstverständlich auch bei Verwendung nur eines Linearmotors zweckmäßigerweise vorzusehen.

## Patentansprüche

1. Vorrichtung zum Ziehen, Stoßen oder Räumen von Nuten oder Profilen, umfassend ein über eine Antriebseinrichtung bezüglich eines zu bearbeitenden Werkstücks vertikal bewegbares Werkzeugaggregat, das über wenigstens eine vertikale Linearführung (11, 20) geführt ist, **dadurch gekennzeichnet, dass** die das Werkzeugaggregat (4, 17) bewegende Antriebseinrichtung ein vertikal arbeitender elektromagnetischer Linearantrieb (5, 23) ist, wobei der Linearantrieb (23) außerhalb eines Vorrichtungsgehäuses (16) oder eines Vorrichtungsgestells angeordnet ist, wobei das Werkzeugaggregat (17) über einen Träger (27) mit einem beweglichen Teil (25) der Linearführung (23) verbunden ist, der eine vertikal verlaufende Durchbrechung (30) in der das Vorrichtungsgehäuse (16) oder Vorrichtungsgestell rückwärtig schließenden Wand (22) durchsetzt.

2. Vorrichtung nach Anspruch 1, **dadurch gekennzeichnet, dass** zwei parallel arbeitende, einander gegenüberliegende elektromagnetische Linearantriebe (5, 23) vorgesehen sind

3. Vorrichtung nach Anspruch 1 oder 2, **dadurch gekennzeichnet, dass** das Werkzeugaggregat (4, 17) an zwei parallelen Linearführungen (11, 20) geführt ist.

4. Vorrichtung nach einem der vorangehenden Ansprüche, **dadurch gekennzeichnet, dass** die beiden Linearantriebe (23) einander gegenüberliegend und der Träger (27) zwischen den Linearantrieben (23) angeordnet ist, während die oder beide Linearführungen (20) an der rückwärtigen Seite (22) des Vorrichtungsgehäuses (16) oder Vorrichtungsgestells vorgesehen sind.

## Claims

1. Apparatus for broaching grooves or profiles, comprising a tool unit which is movable vertically via a drive mechanism relative to a workpiece to be processed and which is guided via at least one vertical linear guide (11, 20), **characterised in that** the drive mechanism moving the tool unit (4, 17) is a vertically operating electromagnetic linear drive (5, 23), wherein the linear drive (23) is disposed outside an apparatus housing (16) or an apparatus stand, the tool unit (17) being connected to a moving part (25) of the linear guide (23) via a support (27), which penetrates a vertically extending perforation (30) in the wall (22) closing the back of the apparatus housing (16) or apparatus stand.

2. Apparatus according to claim 1, **characterised in that** two mutually opposing electromagnetic linear drives (5, 23) working in parallel are provided.

3. Apparatus according to claim 1 or 2, **characterised in that** the tool unit (4, 17) is guided on two parallel linear guides (11, 20).

4. Apparatus according to one of the preceding claims, **characterised in that** the two linear drives (23) are disposed opposite one another and the support (27) is disposed between the linear drives (23), whilst the one or both linear guides (20) are provided on the rear face (22) of the apparatus housing (16) or apparatus stand.

## Revendications

1. Dispositif pour l'emboutissage, le mortaisage ou le brochage de rainures ou profils, comportant un organe porte-outil qui, par l'intermédiaire d'un dispositif d'entraînement, peut être déplacé verticalement par rapport à une pièce à usiner et qui est guidé sur au moins un guidage linéaire (11, 20) vertical, **caractérisé en ce que** le dispositif d'entraînement, qui déplace l'organe porte-outil (4, 17), est un entraînement linéaire (5, 23) électromagnétique travaillant dans le sens vertical, l'entraînement linaire (23) étant monté à l'extérieur du carter (16) du dispositif ou d'un bâti du dispositif, l'organe porte-outil (17) étant relié par l'intermédiaire d'un support (27) à une partie mobile (25) du guidage linéaire (23), qui passe à travers un passage (30), ménagé dans le sens vertical dans la paroi (22) fermant l'arrière du carter (16) du dispositif ou du bâti du dispositif.

2. Dispositif selon la revendication 1, **caractérisé en ce qu'**il est prévu deux entraînements linéaires électromagnétiques (5, 23), situés face à face et travaillant en parallèle.

3. Dispositif selon la revendication 1 ou 2, **caractérisé en ce que** l'organe porte-outil (4, 17) est guidé sur deux guidages linéaires (11, 20) parallèles.

4. Dispositif selon l'une quelconque des revendications précédentes, **caractérisé en ce que** les deux entraînements linéaires (23) sont situés en regard l'un de l'autre et le support (27) est monté entre les entraînements linéaires (23), tandis que le ou les deux guidages linéaires (20) sont prévus sur la face arrière (22) du carter (16) du dispositif ou du bâti du dispositif.
